# EUROPEAN PATENT SPECIFICATION

(11) **EP 1 162 809 B1**
(45) Date of publication and mention of the grant of the patent: **23.04.2008**
(21) Application number: 01300389.2
(22) Date of filing: 17.01.2001
(51) Int. Cl.: H04L 29/06, H04L 12/28, H04Q 7/22

(54) **Data communication**
Datenkommunikation
Communication de données

(30) Priority: 10.06.2000 KR 2000031952
(43) Date of publication of application: 12.12.2001
(73) Proprietor: SAMSUNG ELECTRONICS CO., LTD., Suwon-si, Gyeonggi-do 442-742 (KR)
(72) Inventor: Park, Jeong-hoon, c/o Samsung Electronics Co. Ltd., Suwon-city, Kyungki-do (KR); Park, Dong-seek, c/o Samsung Electronics Co., Ltd., Suwon-city, Kyungki-do (KR)
(74) Representative: Walaski, Jan Filip

(56) References cited:
- SEYTTER F: "An efficient multiplex architecture for mobile MPEG-4 systems - Image Communication" SIGNAL PROCESSING. IMAGE COMMUNICATION, ELSEVIER SCIENCE PUBLISHERS, AMSTERDAM, NL, vol. 14, no. 6-8, May 1999 (1999-05), pages 599-606, XP004165398 ISSN: 0923-5965
- SUN Z ET AL: "Adaptive two-level unequal error protection convolutional code scheme for wireless ATM networks" INFOCOM 2000. NINETEENTH ANNUAL JOINT CONFERENCE OF THE IEEE COMPUTER AND COMMUNICATIONS SOCIETIES. PROCEEDINGS. IEEE TEL AVIV, ISRAEL 26-30 MARCH 2000, PISCATAWAY, NJ, USA,IEEE, US, 26 March 2000 (2000-03-26), pages 1693-1697, XP010376107 ISBN: 0-7803-5880-5
- HAN J K ET AL: "Networking applications of the hierarchical mode of the JPEG standard" COMPUTERS AND COMMUNICATIONS, 1996., CONFERENCE PROCEEDINGS OF THE 1996 IEEE FIFTEENTH ANNUAL INTERNATIONAL PHOENIX CONFERENCE ON SCOTTSDALE, AZ, USA 27-29 MARCH 1996, NEW YORK, NY, USA,IEEE, US, 27 March 1996 (1996-03-27), pages 58-64, XP010158345 ISBN: 0-7803-3255-5
- DUCLA-SOARES L ET AL: "Error resilience and concealment performance for MPEG-4 frame-based video coding" SIGNAL PROCESSING. IMAGE COMMUNICATION, ELSEVIER SCIENCE PUBLISHERS, AMSTERDAM, NL, vol. 14, no. 6-8, May 1999 (1999-05), pages 447-472, XP004165388 ISSN: 0923-5965

## Description

The present invention relates to method of receiving data packets comprising header data and payload data, the method comprising passing received payload data up a receiving protocol stack, a method of transmitting and receiving data packets comprising header data and payload data, the method comprising passing payload data down a transmission protocol stack while adding header data, a data receiving apparatus comprising an implementation of a receiving protocol stack for receiving data packets and a data transmitting and receiving apparatus comprising an implementation of a transmitting protocol stack for transmitting data packets and an implementation of a receiving protocol stack for receiving data packets.

Generally, a transmitting terminal of a cdma telecommunication system transmits data through an application layer, a radio link protocol layer, an MUX sub layer, and a physical layer. That is, the application layer is a CODEC-related standard such as H.324M, H323, and T.120. In the physical layer 130 channel coding, PN spreading and modulation are performed together with air interface functions.

Document "An efficient multiplex architecture for mobile MPEG-4 systems "by Fritz Seytter, as the present application, is concerned with improvements in a communication system where the packets are formatted according to H.234.

A radio link protocol (RLP) layer includes a signaling portion, and converts a payload of the application layer transmitted by a radio channel into an input format for the physical layer. The RLP layer has an RLP per application layer of N numbers, and is connected to the physical layer through the MUX sub layer. The MUX sub layer adaptively multiplexes an RLP received from the RLP layer into a protocol data unit (PDU).

The cdma telecommunication system checks for errors in the physical layer. Here, data which is determined to have errors in the physical layer by a cyclic redundancy code (CRC) information cannot be transmitted to the upper layer if the MUX sub layer does not include a CRC field. Also, if errors are included in the MUX sub layer including the CRC field, data is not transmitted to the upper layer. Therefore, the amount of overall data which is transmitted from the transmitting portion to the receiving portion is decreased by performing an error check of the CRC field.

A method of receiving data packets, according to the present invention, is characterised by, in the event of the detection of an error in a received packet:
decoding the packet's header to extract a header element, in a first protocol stack layer;
if the element is not in a predetermined catalogue then passing a default payload to a second, immediately above protocol stack layer else passing the received payload to the second protocol stack layer in accordance with a quality of service requirement in a corresponding entry in a quality of service catalogue.

Preferred and optional features of the method of receiving data packets are set forth in claims 2 to 5 appended hereto.

A method of transmitting and receiving data packets, according to the present invention, is characterised by including, in at least one of said headers, a header element, determined from a predetermined catalogue, and performing a method of receiving data packets according to the present invention.

Preferred and optional features of the method of transmitting and receiving data packets are set forth in claims 7 to 10 appended hereto.

A data receiving apparatus, according to the present invention, is characterised by the protocol stack implementation being configured such that the apparatus performs a method of receiving data packets according to the present invention.

A data transmitting and receiving apparatus, according to the present invention, is characterised by the protocol stack implementations being configured such that the apparatus performs a method of transmitting and receiving data packets according to the present invention.

An embodiment of the present invention will now be described, by way of example, with reference to the accompanying drawings, in which:
Figure 1 is an overall structural diagram showing an apparatus for transmitting/receiving wireless data according to the present invention;
Figure 2 illustrates a protocol format formed by passing through each layer of the transmitting terminal of Figure 1;
Figure 3 is a flowchart showing a method for transmitting wireless data according to the present invention; and
Figure 4 is a flowchart showing a method for receiving wireless data according to the present invention.

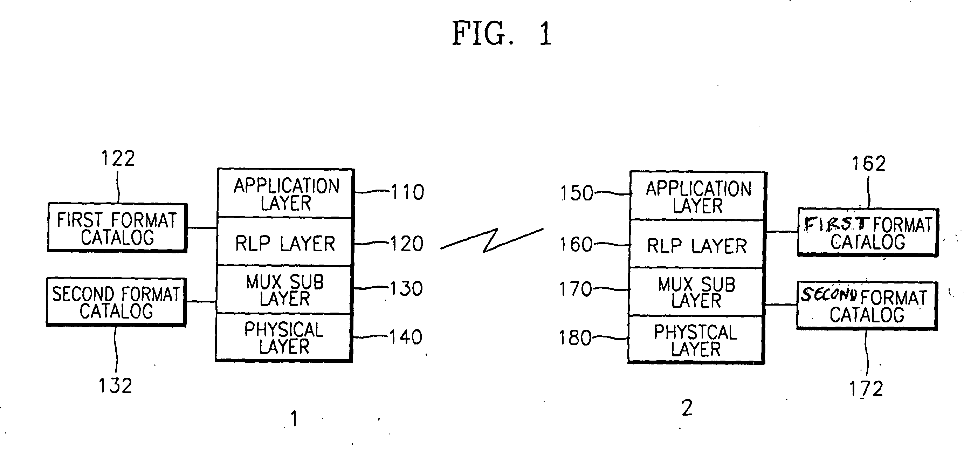

Referring to Figure 1, a transmitting terminal 1 and a receiving terminal 2 each include a QoS catalogue relating to quality of service (QoS) factor such as the delay time of data transmitted and an error generation probability of data which will be used.

The transmitting terminal 1 conveys data through an application layer 110, an RLP layer 120, an MUX sub layer 130, and a physical layer 140, and includes a first format catalogue 122 and a second format catalogue 132 which catalogue information related to the data service used for transmitting to the RLP layer 120 and the MUX sub layer 130.

The receiving terminal 2 or a repeater conveys received data up through the protocol stack from the physical layer 180, through the MUX sub layer 170 and the RLP layer 160, to the application layer 150, and compares header information of received data with values in the a format catalogue 172 and a second format catalogue 162 which catalogue information about the data service in the MUX sub layer 170 and the RLP layer 160.

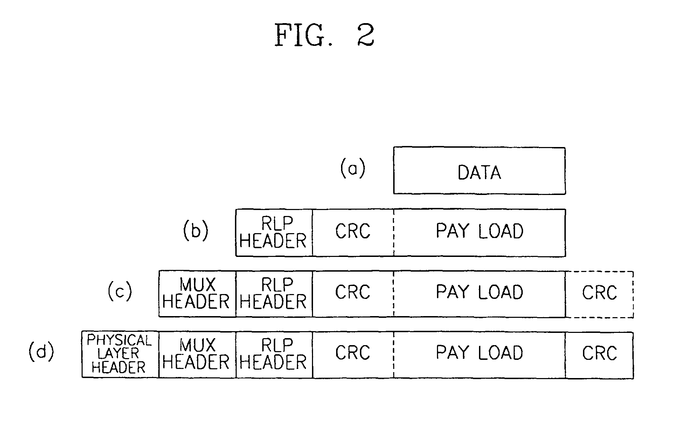

Referring to Figure 2, (a) is the protocol format of the application layer 110. (b) is the protocol format of the RLP layer 120 comprising a RLP header and the payload and a CRC added for protecting the RLP header information. (c) is the protocol format of the MUX sub layer 130 comprising an MUX header and the payload and an CRC is optionally added to the payload. (d) is the protocol format of the physical layer 140 comprising a physical layer header and the payload and a CRC added to the payload.

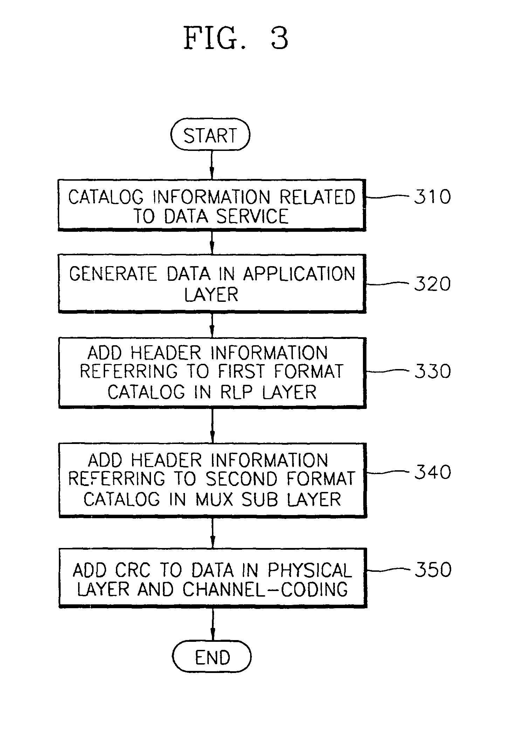

Referring to Figure 3, for transmission, information related to the data service is first determined from the first format catalogue 122, the second format catalogue 132, and a QoS catalogue (not shown) (step 310). For example, the payload size of the RLP is included in the first format catalogue 122, a service index which designates the application data multiplexed in the MUX sub layer is included in the second format catalogue 132, and a QoS parameter, such as a delay time of data which will be transmitted or an error generation probability of data, is included in the QoS catalogue (not shown).

Next, data is generated in the application layer 110 and transmitted to the lower ranking RLP layer 120 (step 320).

Next, the data received in the application layer 110 is formed into the payload in the RLP layer 120, and transmitted to the MUX sub layer 130 with header information added to the data (step 330). Here, information about the RLP from the first format catalogue is included in the header information, and also a field for checking errors can be inserted.

Next, in the MUX sub layer 130, the service index which designates the application data of the data received from the RLP layer 120 is added as the header information, and transmitted to the physical layer 140 (step 340). Here, a field for checking errors can be inserted in the header for protecting the header information. Then, separate error correction can be added for the header and the payload, error correction can be added for the whole packet or no error correction can be added.

Next, in the physical layer 140, a physical layer header and a CRC are added to the data received in the MUX sub layer 130, and channel coded and transmitted to the receiving terminal through an antenna (step 350).

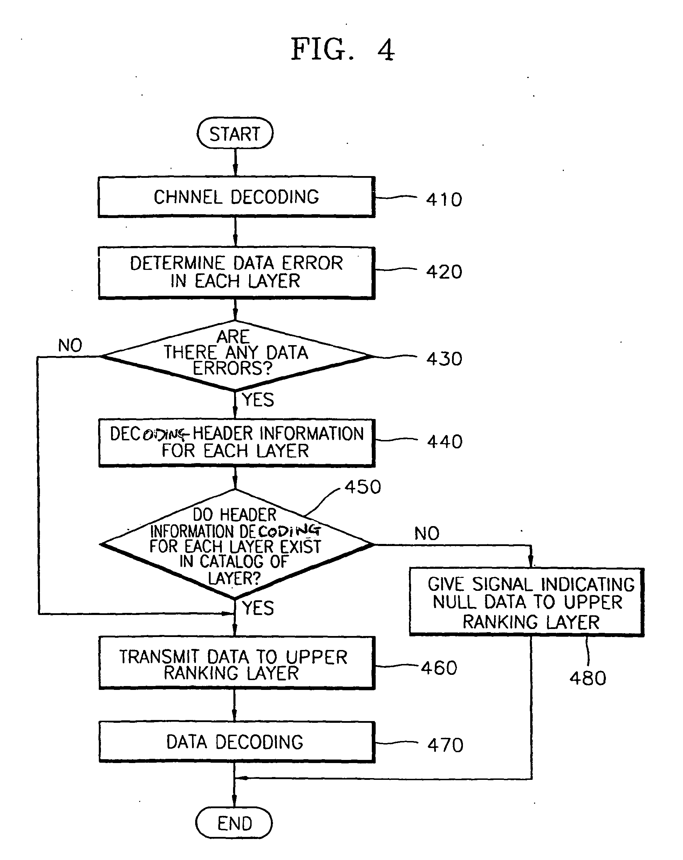

Referring to Figure 4, before any data is transmitted, the receiving terminal includes a second format catalogue 172 and a first format catalogue 162 which are identical to those of the transmitting terminal, and also includes a QoS catalogue (not shown) determining items about the data service received in the transmitting terminal.

In the physical layer 180, the received data packets are channel-decoded to obtain the header, the payload, and the CRC information (step 410). In the physical layer 180, a value detected from the data size and the header information, and the data errors detected by the CRC check are transmitted to the MUX sub layer 170 with the data.

Next, in the MUX sub layer 170, it is determined whether there are errors in the data from the CRC information conveyed from the lower ranking physical layer 180 (step 420).

Here, in the MUX sub layer 170, if it is determined that there are no errors in the received data, the data is transmitted to the RLP layer 160, and if it is determined that there is an error, the MUX header information of the received data is decoded (steps 430, 440). Here, the parameters determined in the second format catalogue 172 and the QoS catalogue are applied as a standard of judgement in order to determine whether the data is transmitted to the RLP layer 160 according to the quality of service or the decoder of the application layer.

Next, in the MUX sub layer 170, if the deciphered header information is included in the value stored in the second format catalogue 172, the data is transmitted to the RLP layer 160 according to the quality of service determined in the QoS catalogue in the beginning (steps 450, 460).

Next, the RLP header information is decoded in the RLP layer 160, and if the decoded header information corresponds to the value determined in the first format catalogue 162 which the decoded header information itself includes, the data is transmitted to the application layer 150, according to the quality of service determined in the QoS catalogue in the beginning, regardless of the errors of the payload.

Next, the data received in the application layer 150 is decoded as video or audio data by the decoder (step 470).

Each layer signals null data to the above layer if the deciphered header information does not exist in each catalogue (step 480).

The present invention can check the header information or not according to the kind of the application layer service determined in the QoS catalogue before the data is transmitted/received for the first time. That is, if the used service cannot decode bit errors of the payload, or if the quality of service (QoS) wanted by a customer cannot use data having bit errors, the data is conveyed to the upper ranking layer through the CRC check on the entire data. Here, the quality of service must be satisfied by re-transmitting the data having the errors, and thereby, a real time for transmitting the data can be delayed.

If the bit errors of the payload can be sufficiently decoded, and the quality of service desired by a customer is real time transmission of data, data having no errors in the header is transmitted to the upper ranking layer even though there are CRC errors in the entire data.

Also, except this, the present invention determines the type of service used in the QoS catalogue and the support of the decoder, and can form various types. That is, dividing the case that the error checking function is added to the header information and the case that an error correcting function is also added to the same, the error correcting function is used rather than the error checking function if a little time can be delayed rather than the exact real time.

The method for transmitting data using this type of service and the support of the decoder can be determined through signaling during connection to a radio terminal to the repeater in the beginning, and through the service index added to the header field of the MUX sub layer in the transmitting layer used now. The decoder of the application layer can receive data errors determined in each layer in the signaling method.

The preferred embodiments of the present invention can be composed as a program executed in a computer. From media used for the computer, it can be executed in a general-purpose digital computer which operates the program. The media includes magnetic storing media (for example: an ROM, a floppy disc, a hard disc and so on), optical reading media (for example: CD-ROM, DVD and so on). The code may also be in the form of a data signal (for example: a transmission through the Internet). Also, recording media which a computer can read may be distributed in a computer system connected by a network, and codes which a computer can read in a distributed method can be stored and executed.

According to the present invention, contrary to the conventional method, in that data is not transmitted uniformly to the upper layer if it is determined that there are errors through the error check of the entire data, data belonging to the determined information catalogue is transmitted regardless of the error of the payload, so that the real-time and catalogue transmission/reception of data is possible according to the quality of service used or the decoding method of the application layer.

## Claims

1. A method of receiving data packets comprising header data and payload data, the method comprising passing received payload data up a receiving protocol stack (2), and in the event of the detection of an error in a received packet:
decoding the packet's header to extract a header element, in a first protocol stack layer (170);
if the header element is not in a predetermined catalogue (172, 132) then passing a default payload to a second, immediately above protocol stack layer (160) else passing the received payload to the second protocol stack layer (160) in accordance with a quality of service requirement in a corresponding entry in a quality of service catalogue.

2. A method according to claim 1, wherein the data packets are received wirelessly.

3. A method according to claim 2, comprising the steps of:
(a) performing channel-decoding on a receive packet; and
(b) if an error is detected in the received packet then
(i) extracting a header element from the packet's header in the first protocol stack layer (170);
(ii) if the element is not in a first predetermined catalogue (172, 132) then
(I) passing a default payload to the second protocol stack layer (160)
else
(II) passing the received payload to the second protocol stack layer (160) in accordance with a quality of service requirement in a corresponding entry in a quality of service catalogue;
(iii) extracting a header element from the packet's header in a second protocol stack layer (160); and
(iv) if the header element is not in a second predetermined catalogue (162, 122) then
(I) passing a default payload to a third, immediately above protocol stack layer (150)
else
(II) passing the received payload to the third protocol stack layer (150) in accordance with a quality of service requirement in a corresponding entry in the quality of QoS catalogue and decoding the payload in the third protocol stack layer (150).

4. A method according to claim 1, 2 or 3, wherein the quality of service requirements are delay time values for transmitted data or error rate values for the transmitted data.

5. A method according to any preceding claim, wherein the default payload is null data.

6. A method of transmitting and receiving data packets comprising header data and payload data, the method comprising passing payload data down through the layers (110, 120, 130, 140) of a transmission protocol stack (1) while adding a headers in at least one of said layers (120, 130), including, in at least one of said headers, a header element, determined from a predetermined catalogue (122, 132, 162, 172), and performing a method according to any one of claims 1 to 5.

7. A method according to claim 6, wherein the data packets are transmitted wirelessly.

8. A method according to claim 7, comprising the steps of:
in first and second layers (120, 130) of the transmission protocol stack (1), adding header elements determined from said second (122, 162) and first (132, 172) predetermined catalogues respectively;
adding error detecting codes to the payload; and
performing channel-coding.

9. A method according to claim 8, including setting up the predetermined catalogues (162, 172), used for reception, during the early data transmission/reception, wherein the first and second predetermined catalogues (172, 162) are used by the MUX and RLP protocol stack layers (170, 160) respectively.

10. A method according to any preceding claim, wherein said header elements relate to the format of the payload data at the associated protocol stack layer.

11. A data receiving apparatus comprising an implementation of a receiving protocol stack (2) for receiving data packets, the protocol stack implementation being configured such that the apparatus performs a method according to any one of claims 1 to 5.

12. A data transmitting and receiving apparatus comprising an implementation of a transmitting protocol stack (1) for transmitting data packets and an implementation of a receiving protocol stack (2) for receiving data packets, the protocol stack implementations being configured such that the apparatus performs a method according to any one of claims 6 to 10.

## Patentansprüche

1. Verfahren zum Empfangen von Datenpaketen umfassend Kopfdaten und Nutzlastdaten, wobei das Verfahren das Hinaufreichen empfangener Nutzlastdaten in einem Empfangs-Protokollstapel (2) umfasst und bei dem Ereignis der Erkennung eines Fehlers in einem empfangenen Paket:
Dekodieren des Paketkopfes zum Extrahieren eines Kopfelements in einer ersten Protokollstapelschicht (170);
wenn sich das Kopfelement nicht in einem vorgegebenen Katalog (172, 132) befindet, Weiterreichen einer Standardnutzlast an eine zweite, unmittelbar darüber liegende Protokollstapelschicht (160), andernfalls Weiterreichen der empfangenen Nutzlast an die zweite Protokollstapelschicht (160) in Übereinstimmung mit einer Dienstgüteanforderung in einem entsprechenden Eintrag in einem Dienstgütekatalog.

2. Verfahren nach Anspruch 1, wobei die Datenpakete drahtlos empfangen werden.

3. Verfahren nach Anspruch 2, umfassend die Schritte:
a) Durchführen einer Kanaldekodierung an einem Empfangspaket; und
b) wenn ein Fehler in dem empfangenen Paket erkannt wird, dann
i. Extrahieren eines Kopfelements aus dem Paketkopf in der ersten Protokollstapelschicht (170);
ii. wenn sich das Element nicht in einem ersten vorgegebenen Katalog (172, 132) befindet, dann
I. Weiterreichen einer Standardnutzlast an die zweite Protokollstapelschicht (160)
andernfalls
II. Weiterreichen der empfangenen Nutzlast an die zweite Protokollstapelschicht (160) in Übereinstimmung mit einer Dienstgüteanforderung in einem entsprechenden Eintrag in einem Dienstgütekatalog;
iii. Extrahieren eines Kopfelements aus dem Paketkopf in einer zweiten Protokollstapelschicht (160); und
iv. wenn sich das Kopfelement nicht in einem zweiten vorgegebenen Katalog (162, 122) befindet, dann
I. Weiterreichen einer Standardnutzlast an eine dritte, unmittelbar darüber liegende Protokollstapelschicht (150)
andernfalls
II. Weiterreichen der empfangenen Nutzlast an die dritte Protokollstapelschicht (150) in Übereinstimmung mit einer Dienstgüteanforderung in einem entsprechenden Eintrag in dem Dienstgütekatalog (Quality of Service, QoS) und Dekodieren der Nutzlast in der dritten Protokollstapelschicht (150).

4. Verfahren nach Anspruch 1, 2 oder 3, wobei die Dienstgüteanforderungen Laufzeitverzögerungswerte für übertragene Daten oder Fehlerratenwerte für die übertragenen Daten sind.

5. Verfahren nach einem vorhergehenden Anspruch, wobei die Standardnutzlast Nulldaten sind.

6. Verfahren zum Übertragen und Empfangen von Datenpaketen umfassend Kopfdaten und Nutzlastdaten, wobei das Verfahren das Hinunterreichen von Nutzlastdaten durch die Schichten (110, 120, 130, 140) eines Übertragungsprotokollstapels (1) umfasst, wobei in zumindest einer der Schichten (120, 130) ein Kopf hinzugefügt wird, umfassend, in zumindest einem der Köpfe, ein Kopfelement, festgelegt von einem vorgegebenen Katalog (122, 132, 162, 172), und Durchführen eines Verfahrens nach einem der Ansprüche 1 bis 5.

7. Verfahren nach Anspruch 6, wobei die Datenpakete drahtlos übertragen werden.

8. Verfahren nach Anspruch 7, umfassend die Schritte:
in ersten und zweiten Schichten (120, 130) des Übertragungsprotokollstapels (1) Hinzufügen von Kopfelementen, festgelegt von den zweiten (122, 162) respektive ersten (132, 172) vorgegebenen Katalogen;
Hinzufügen von fehlererkennenden Codes zu der Nutzlast; und
Durchführen der Kanalkodierung.

9. Verfahren nach Anspruch 8, umfassend das Einrichten der vorgegebenen Kataloge (162, 172), die für den Empfang genutzt werden, während des anfänglichen Übertragens/Empfangens von Daten, wobei die ersten und zweiten vorgegebenen Kataloge (172, 162) von den MUX-Protokollstapelschichten respektive RLP-Protokollstapelschichten (170, 160) verwendet werden.

10. Verfahren nach einem vorhergehenden Anspruch, wobei sich die Kopfelemente auf das Format der Nutzlastdaten auf der zugehörigen Protokollstapelschicht beziehen.

11. Vorrichtung zum Empfangen von Daten, umfassend eine Implementierung eines Empfangsprotokollstapels (2) zum Empfangen von Datenpaketen, wobei die Protokollstapelimplementierung solcherart konfiguriert ist, dass die Vorrichtung ein Verfahren nach einem der Ansprüche 1 bis 5 ausführt.

12. Vorrichtung zum Übertragen und Empfangen von Daten, umfassend eine Implementierung eines Übertragungsprotokollstapels (1) zum Übertragen von Datenpaketen und eine Implementierung eines Empfangsprotokollstapels (2) zum Empfangen von Datenpaketen, wobei die Protokollstapelimplementierungen solcherart konfiguriert sind, dass die Vorrichtung ein Verfahren nach einem der Ansprüche 6 bis 10 ausführt.

## Revendications

1. Procédé pour recevoir des paquets de données comportant des données d'en-tête et des données de charge utile, le procédé comportant des étapes consistant à faire passer des données de charge utile reçues jusqu'à une pile de protocoles de réception (2) dans le cas de la détection d'une erreur dans le paquet reçu, et
décoder l'en-tête de paquet pour extraire un élément d'en-tête, dans une première couche de pile de protocoles (170),
si l'élément d'en-tête n'est pas dans un catalogue prédéterminé (172, 132), alors faire passer une charge utile par défaut vers une seconde couche de pile de protocoles immédiatement au-dessus (160) en faisant passer la charge utile reçue vers la deuxième couche de pile de protocoles (160) selon une qualité d'exigence de service dans une entrée correspondante dans un catalogue de qualités de service.

2. Procédé selon la revendication 1, dans lequel les paquets de données sont reçus sans fil.

3. Procédé selon la revendication 2, comportant les étapes consistant à :
(a) effectuer un décodage de canal sur un paquet reçu, et
(b) si une erreur est détectée dans le paquet reçu, alors
(i) extraire un élément d'en-tête de l'en-tête de paquet dans la première couche de pile de protocoles (170),
(ii) si l'élément n'est pas dans un premier catalogue prédéterminé (172, 132), alors
(I) faire passer une charge utile par défaut vers une deuxième couche de pile de protocoles (160)
ou
(II) faire passer la charge utile reçue vers la deuxième couche de pile de protocoles (160) selon une qualité d'exigence de service dans une entrée correspondante dans un catalogue de qualités de service,
(iii) extraire un élément d'en-tête à partir de l'en-tête de paquet dans une seconde couche de pile de protocoles (160), et
(iv) si l'élément d'en-tête n'est pas dans un second catalogue prédéterminé (160, 122), alors
(I) faire passer une charge utile par défaut vers une troisième couche de pile de protocoles immédiatement au-dessus (150),
ou
(II) faire passer la charge utile reçue vers la troisième couche de pile de protocoles (150) selon une exigence de qualité de service dans une entrée correspondante du catalogue de qualités de service, et détecter la charge utile dans la troisième couche de pile de protocoles (150).

4. Procédé selon la revendication 1, 2 ou 3, dans lequel les exigences de qualité de service sont des valeurs de temps de retard pour des données transmises ou des valeurs de taux d'erreur pour les données transmises.

5. Procédé selon l'une quelconque des revendications précédentes, dans lequel la charge utile par défaut est constituée de données nulles.

6. Procédé pour transmettre et recevoir des paquets de données comportant des données d'en-tête et des données de charge utile, le procédé comportant les étapes consistant à faire passer des données de charge utile vers le bas à travers les couches (110, 120, 130, 140) d'une pile de protocoles de transmission (1) tout en ajoutant un en-tête dans au moins une desdites couches (120, 130) incluant, dans au moins un desdits en-têtes, un élément d'en-tête, déterminé à partir d'un catalogue prédéterminé (122, 132, 162, 172), et mettre en oeuvre un procédé selon l'une quelconque des revendications 1 à 5.

7. Procédé selon la revendication 6, dans lequel les paquets de données sont transmis sans fil.

8. Procédé selon la revendication 7, comportant les étapes consistant à :
dans des première et deuxième couches (120, 130) de la pile de protocoles de transmission (1), ajouter des éléments d'en-tête déterminés à partir desdits second (122, 162) et premier (132, 172) catalogues prédéterminés, respectivement,
ajouter des codes de détection d'erreur à la charge utile, et
effectuer un codage de canal.

9. Procédé selon la revendication 8, comportant l'établissement de catalogues prédéterminés (162, 172), utilisés pour une réception, pendant la transmission/réception de données antérieures, dans lequel les premier et second catalogues prédéterminés (172, 162) sont utilisés par les couches de pile de protocoles MUX et RLP (170, 160), respectivement.

10. Procédé selon l'une quelconque des revendications précédentes, dans lequel lesdits éléments d'en-tête concernent le format des données de charge utile au niveau de la couche de pile de protocoles associée.

11. Dispositif de réception de données comportant une implémentation d'une pile de protocoles de réception (2) pour recevoir des paquets de données, l'implémentation de pile de protocoles étant configurée de telle sorte que le dispositif met en oeuvre un procédé selon l'une quelconque des revendications 1 à 5.

12. Dispositif de transmission et de réception de données comportant une implémentation d'une pile de protocoles de transmission (1) pour transmettre des paquets de données et une implémentation d'une pile de protocoles de réception (2) pour recevoir des paquets de données, les implémentations des piles de protocoles étant configurées de telle sorte que le dispositif met en oeuvre un procédé selon l'une quelconque des revendications 6 à 10.
